Europäisches Patentamt

European Patent Office

Office européen des brevets

(19)

(11) Veröffentlichungsnummer: **0 239 599**
**B1**

(12) **EUROPÄISCHE PATENTSCHRIFT**

(45) Veröffentlichungstag der Patentschrift: **11.07.90**

(51) Int. Cl.⁵: **G 06 F 15/332**

(21) Anmeldenummer: **86905806.5**

(22) Anmeldetag: **09.10.86**

(86) Internationale Anmeldenummer:
**PCT/EP86/00578**

(87) Internationale Veröffentlichungsnummer:
**WO 87/02489 23.04.87 Gazette 87/09**

(54) SCHALTUNGSANORDNUNG FÜR VEKTORTRANSFORMATION.

(30) Priorität: **16.10.85 DE 3536773**

(43) Veröffentlichungstag der Anmeldung:
**07.10.87 Patentblatt 87/41**

(45) Bekanntmachung des Hinweises auf die
Patenterteilung:
**11.07.90 Patentblatt 90/28**

(84) Benannte Vertragsstaaten:
**AT BE CH DE FR GB IT LI LU NL SE**

(56) Entgegenhaltungen:
**US-A-4 062 060**

**IBM Technical Disclosure Bulletin, vol. 21, no. 6,
November 1978, (New York,US), H.
Nussbaumer: "Efficient implementation of
convolutions and discrete transforms using
polynomial transforms and distributed
arithmetic", pages 2374-2375
Frequenz, vol. 20, no. 7, July 1977, (Berlin,DE)
H.J. Grallert: "Transformation von Bilddaten mit
Hilfe von m-Funktionen", pages 196-199**

(73) Patentinhaber: **TELEFUNKEN Fernseh und
Rundfunk GmbH
Göttinger Chaussee 76
D-3000 Hannover 91 (DE)**

(72) Erfinder: **VUONG, The, Anh
Priessnitzweg 3
D-7000 Stuttgart 50 (DE)**

(74) Vertreter: **Einsel, Robert, Dipl.-Ing.
TELEFUNKEN Fernseh und Rundfunk GmbH
Göttinger Chaussee 76
D-3000 Hannover 91 (DE)**

Courier Press, Leamington Spa, England.

**Beschreibung**

Die Erfindung betrifft eine Schaltungsanordnung zur Transformation gemäß dem Oberbegriff des Patentanspruchs 1.

Aus NTZ Archiv Bd. 3 (1981), Heft 1, Seite 9 ff ist ein neuartiges Funktionensystem (m-Funktionen) und seine Anwendung in der Bildübertragung bekannt. Mit Hilfe von rückgekoppelten Schieberegistern lassen sich zweiwertige periodische Impulsfolgen erzeugen. Durch Orthonormieren dieser Folgen gewinnt man ein orthonormales, binäres Funktionensystem, das als Grundfuntionensystem, für eine Signaltransformation (m-Transformation) dient, ähnlich der Fourier- oder Walshtransformation.

Aufgabe der Erfindung ist, eine Transformationsschaltung anzugeben, die mit geringem Schaltungsaufwand eine Transformation von Vektoren ermöglicht und z.B. als diskreter zyklischer Korrelator zur m-Transformation in der Bildverarbeitung eingesetzt werden kann.

Die Aufgabe wird durch die im Kennzeichen des Patentanspruchs 1 angegebenen Maßnahmen gelöst. Vorteilhafte Weiterbildungen der Erfindung sind in den Unteransprüchen beschrieben.

Bei der Transformation eines unbekannten Vektors $\vec{A}$ mit Hilfe einer Matrix $\underline{B}^2$ wird erfindungsgemäß die Matrix derart aufgebaut, daß ein bekannter Vektor $\vec{B}$ zeilenweise zyklisch verschoben ist und so eine quadratische Matrix bildet. Die Transformation des unbekannten Vektors $\vec{A}$ mit der aufgebauten Matrix $\underline{B}^2$ ergibt auf schaltungstechnisch einfache Weise die Transformierte $\vec{T}$. Es wird erfindungsgemäß vorausgesetzt, daß die Vektoren $\vec{A}$ und $\vec{B}$ die gleiche Länge N haben und der die Matrix $\underline{B}^2$ aufbauende Vektor $\vec{B}$ in binärer Form vorliegt.

Zur Realisierung der Transformation entsprechend der Beziehung

$$\vec{T} = \frac{1}{N} * \underline{B}^2 * \vec{A} \tag{1}$$

mit

$$\vec{T} = \begin{bmatrix} T_0 \\ . \\ . \\ . \\ T_{N-1} \end{bmatrix}, \vec{A} = \begin{bmatrix} a_0 \\ . \\ . \\ . \\ a_{N-1} \end{bmatrix}, B^2 = \begin{bmatrix} b_0 & b_1 & b_2 \dots b_{N-1} \\ b_1 & b_2 & b_0 \\ b_{N-1} & b_0 \dots \dots b_{N-2} \end{bmatrix}$$

wird der unbekannte Vektor $\vec{A}$ erfindungsgemäß in P Gruppen mit der Länge R aufgeteilt. Die Anzahl der Gruppen P berechnet sich in Abhängigkeit von der gewählten Gruppenlänge R und der Vektorlänge N wie folgt:

$$P = Int\left(\frac{N}{R}\right) + 1 \tag{2}$$

Ist die Vektorlänge N kein ganzzahliges Vielfaches der Gruppenlänge R, wird die letzte Gruppe mit Nullen aufgefüllt, so daß alle Gruppen gleichlang sind. Es gilt dann:

$$a_i = O \text{ für } N-1 < i < P * R \tag{3}$$

Bei paralleler Verarbeitung werden die einzelnen Gruppen je einer Additionsstufe zugeführt, wobei der Aufbau der einzelnen Additionsstufen gleich ist. Die Ausgangssignale der Additionsstufen werden dann über logische Verknüpfungsschaltungen, die wiederum für jede Gruppe gleich aufgebaut sind, einem Rechenwerk zugeführt. Das Rechenwerk liefert als Ausgangssignal die Transformierte.

Bei serieller Verarbeitung der einzelnen Gruppen ist nur eine Additionsstufe und eine Verknüpfungsschaltung erforderlich. Die Ausgänge der Verknüpfungsschaltung sind dann über Multiplexer mit einem Akkumulator verbunden, dem ein Register nachgeschaltet ist, an dessen Ausgängen nach Abarbeitung aller Gruppen die Transformierte anliegt.

Durch die Aufteilung des zu transformierten Vektors in Gruppen wird erreicht, daß sich der Schaltungsaufwand zur Transformation verringert, da die Anzahl der durchzuführenden Additionen und somit auch die Zahl der benötigten Addierer wesentlich verringert wird. Außerdem sind keine Multiplikationsschaltungen erforderlich, da die Transformations-Matrix $\underline{B}^2$ aus binären Symbolen aufgebaut ist.

Zum besseren Verständnis der Erfindung wird nachfolgend die Erfindung anhand der Zeichnungen näher erläutert. Darin ziegen

Fig. 1 ein allgemeines Blockschaltbild für parallele Verarbeitung,

Fig. 2 den Aufbau einer Additionsschaltung,

Fig. 3 eine quadratische Matrix,

Fig. 4 ein Berechnungsschema für Verknüpfungsschaltung,

Fig. 5 eine logische Verknüpfungsschaltung,

Fig. 6 ein Rechenwerk und

Fig. 7 ein Blockschaltbild für serielle Verarbeitung.

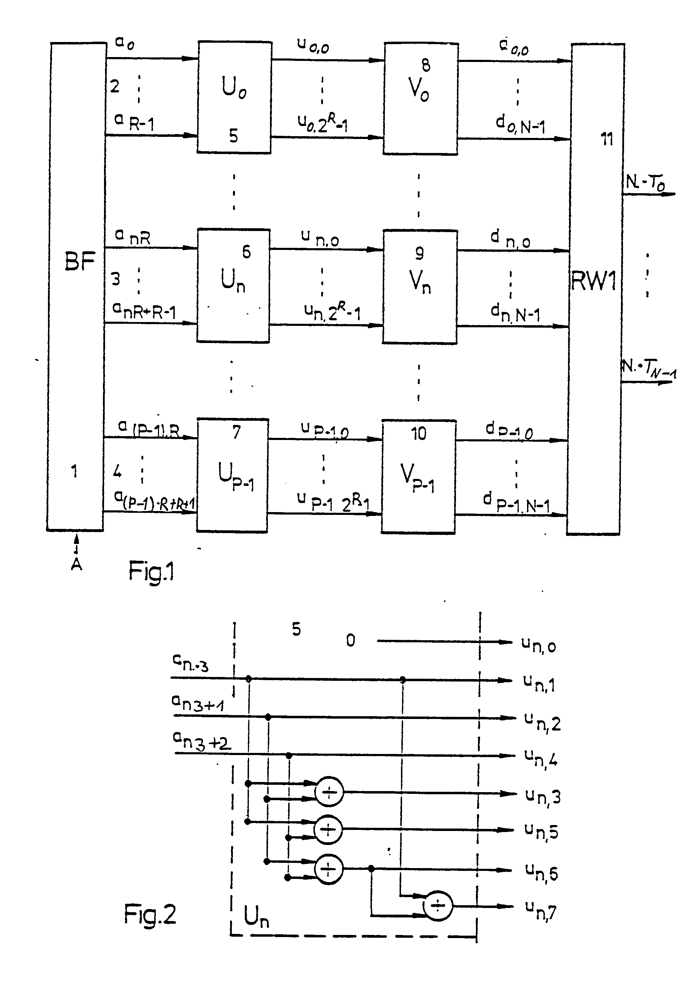

Fig. 1 zeigt ein Blockschaltbild zur Transformation eines unbekannten Vektors $\vec{A}$ der Länge N mit Hilfe einer Matrix $\underline{B}^2$. Der Vektor $\vec{A}$ mit den Elementen $a_i$ mit $i = 0,1 \ldots, N-1$ wird in einen Buffer 1 eingelesen. Die Ausgänge des Buffers 1 $a_i$ werden in P Gruppen 2, 3, 4 der Länge R entsprechend den Gleichungen (2) und (3) aufgeteilt. Die R Signals $a_{n*R}, \ldots, a_{n*R+R-1}$ (Gruppennummern $n = 0, \ldots, P-1$) jeder Gruppe werden jeweils einer Additionsschaltung $U_n$ 5, 6, 7 zugeführt, deren Ausgangssignale $u_{n,j}$ mit $j = 0, \ldots, 2^R-1$ nach der mathematischen Beziehung

$$u_{n,j} = \sum_{m=0}^{R-1} a_{n*R+m} * x_{j,m} \qquad (4)$$

berechnet werden. Dabei ist $x_{j,m}$ die m-te Stelle der binären Darstellung der Zahl j. Für $j = 3 = (011)_2$ beispielsweise, ergäbe sich $X_{3,0} = 1$, $X_{3,1} = 1$, $X_{3,2} = 0$.

Die Bestimmung von $2^R$ Werten $u_{n,j}$ in jedem Block $u_n$ erfordert nur $2^R-R-1$ Additionen, da die Additionsschaltung nach folgenden Schema aufgebaut ist:

a) Bestimmung von $u_{n,o}$, wobei immer gilt $u_{n,o} = 0$.

b) Bestimmung der $u_{n,j}$, für die gilt $j = 2^m$, d.h. es gibt nach Gleichung (4) $u_{n,j} = a_{n*R+M}$, da die binäre Darstellung von j nur eine Stelle mit dem Wert 1 enthält.

c) Bestimmung der $u_{n,j}$, die die Summe zweier $u_{n,j}$ nach b) sind. Die binäre Darstellung von j hat dabei zwei Stellen mit dem Wert 1.

d) Bestimmung der $u_{n,j}$, die sich durch die Summe von zwei Werten nach b) und c) ergeben. Die binäre Darstellung von j hat dabei drei Stellen mit dem Wert 1.

e) usw.

Fig. 2 zeigt den Aufbau einer Additionsschaltung $U_n$ entsprechend Gleichung (4) und dem geschilderten Schema für eine Vektorlänge von $N = 5$ und einer Gruppenlänge von $R = 3$.

Der Ausgang $u_{n,o}$ ist mit Null verbunden. Die Ausgänge $u_{n,1}, u_{n,2}$ und $u_{n,4}$ sind direkt mit den Eingängen $a_{n*R}, a_{n*R+1}$ und $a_{n*R+2}$ verbunden. Am Ausgang $u_{n,3}$ liegt das Additionsergebnis von $a_{n*R}$ und $a_{n*R+1}$, am Ausgang $u_{n,5}$ das Additionsergebnis von $a_{n*R}$ und $a_{n*R+2}$, am Ausgang $u_{n,6}$ das Additionsergebnis von $a_{n*R+1}$ und $a_{n*R+2}$ und am Ausgang $u_{n,7}$ das Additionsergebnis sämtlicher Eingänge an.

Nach Gleichung (2) wären bei der parallelen Verarbeitung $P = 2$ Additionsschaltungen erforderlich.

Die Ausgänge $u_{n,j}$ der Additionsschaltungen 5, 6, 7 in Fig. 1 sind jeweils mit einer Verknüpfungsschaltung $V_n$ 8, 9, 10 verbunden. Die Verknüpfungsschaltung $V_n$ sind jeweils so aufgebaut, daß die Ausgangssignale $d_{n,k}$ mit $k = 0, \ldots, N-1$ nach der Beziehung

$$d_{n,k} = u_{n,j(k)} \qquad (5)$$

mit

$$j(k) = \sum_{m=0}^{R-1} 2^m * b_{(k+m)} \ modulo \ N \qquad (6)$$

mit den Eingangssignalen $u_{n,j}$ verknüpft sind. Da die Werte für j (k) unabhängig von n sind, ist der Aufbau der Verknüpfungsschaltung $V_n$ bei jeder Gruppe gleich. Für die Verknüpfung der Ausgänge $d_{n,k}$ mit den Eingängen $u_{n,j}$ entsprechend dewn Gleichungen (5) und (6) kann man aus der quadratischen Matrix $\underline{B}^2$ (vgl.

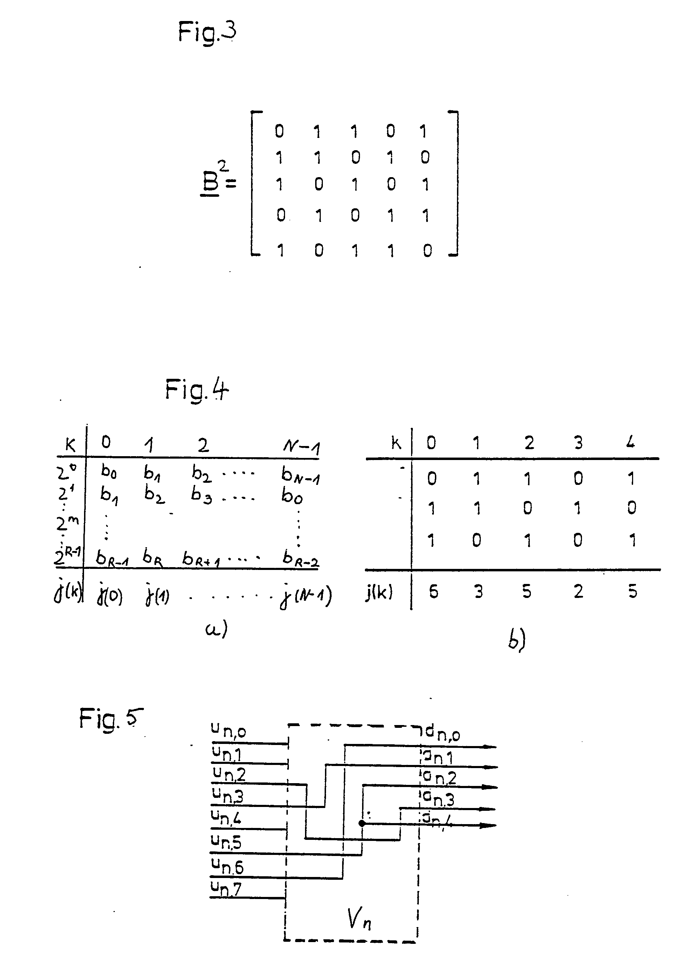

Gleichung (1)) ein Berechnungsschema ableiten, das in Fig. 4a dargestellt ist. Für das Beispiel mit N = 5 und R = 3 ergibt sich mit einem bekannten Vektor B = {0, 1, 1, 0, 1} die quadratische Matrix $\underline{B}^2$, die in Fig. 3 dargestellt ist, und das Berechnungsschema für die Verknüpfungsschaltung, das in Fig. 4b dargestellt ist.

Fig. 5 zeigt den Schaltungsaufbau der Verknüpfungsschaltung für das angegebene Bespiel. Die Ausänge $d_{n,k}$ sind mit den Eingängen $u_{n,j}$ entsprechend den Gleichungen (5) und (6) anhand der im Berechnungsschema Fig. 4b ermittelten Werte verbunden. Für k = 2 ergibt sich beispielsweise aus Fig. 4 der Wert j = 5, d.h. der Ausgang $d_{n,2}$ ist mit dem Eingang $u_{n,5}$ verbunden.

Die Ausgänge $d_{n,k}$ der Verknüpfungsschaltungen 8—10 in Fig. 1 sind mit einem Rechenwerk RW1 verbunden, an dessen Ausgängen die Werte N * $T_k$ anliegen, aus denen auf einfache Weise durch Division durch N die Komponenten $T_k$ der Transformierten $\vec{T}$ ermittelt werden können. Das Rechenwerk RW1 ist so aufgebaut, daß die Ausgangssignale N * $T_k$ entsprechend der Beziehung

$$N * T_k = \sum_{n=0}^{P-1} d_{n,\ (k+n*R)} \ \text{modulo} \ N \qquad (7)$$

ermittelt werden.

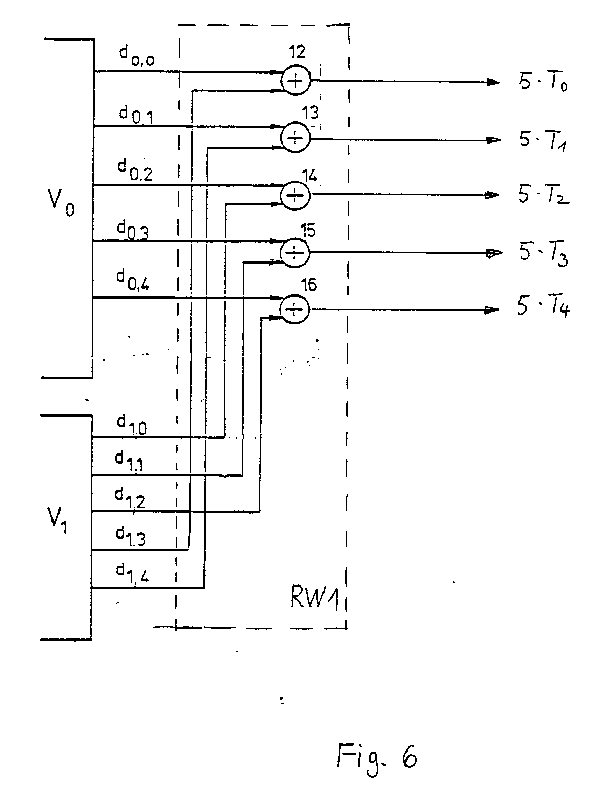

Fig. 6 zeigt die Realisierung des Rechenwerks RW1 entsprechend Gleichung (7) für das angegebene Beispiel. Der Wert für 5 * $T_3$ ergibt sich beispielsweise als Summe des Signales $d_{0,3}$ der ersten Verknüpfungsschaltung $V_0$ und dem um den Wert R = 3 zyklisch verschobenen Signale $d_{1,1}$ der zweiten Verknüpfungsschaltung $V_1$.

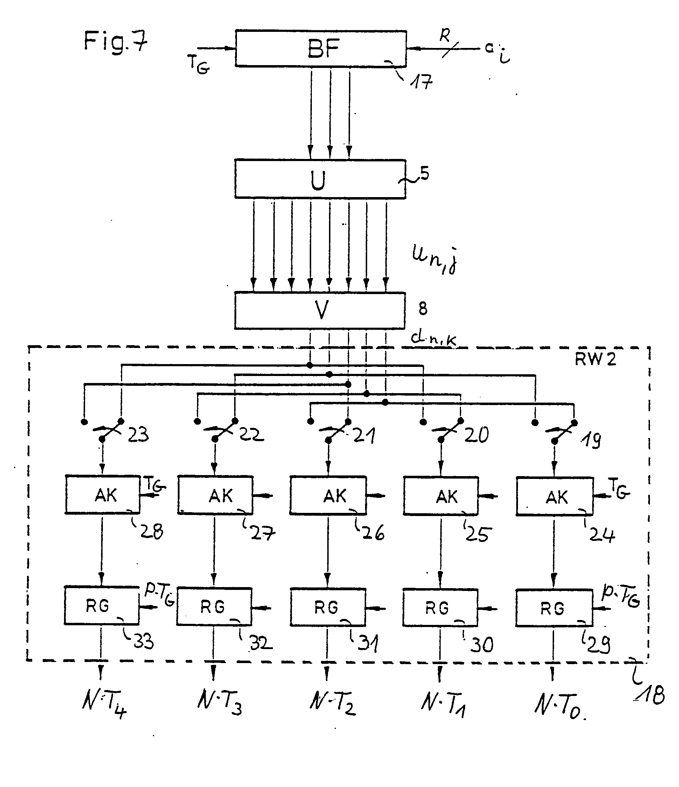

Bei der seriellen Verarbeitung, für die Fig. 7 ein Beispiel mit N = 5, R = 3 und P = 2 zeigt, werden zunächst die ersten R Elemente des Vektors $\vec{A}$ in einen Buffer 17 der Länge R eingeschoben. Die Ausgänge des Buffers 17 sind mit einer Additionsschaltung 5, die genauso wie die bei der parallelen Verarbeitung verwendeten Additionsshaltungen aufgebaut ist, verbunden. An diese schließt sich eine Verknüpfungsschaltung 8 an, die wiederum vom Aufbau her identisch ist mit einer Verknüpfungsschaltung bei der parallelen Verarbeitung.

Die Ausgänge $d_{n,k}$ der Verknüpfungsschaltung V werden dann einem Rechenwerk RW2 18 zugeführt, das für jeden der N zu berechnenden Werte $T_k$ der Transformierten $\vec{T}$ je einem Multiplexer 19—23, einem Akkumulator Ak 24—28 und ein Register RG 29—33 enthält. Die zeitlich im Abstand $T_G$ für jede Gruppe n nacheinander gelieferten N Werte $d_{n,k}$ der Verknüpfungsschaltung V, die aus dem mit dem Takt $T_G$ in den Buffer eingelesenen, jeweils zu einer Gruppe gehörenden R Elementen $a_l$ ermittelt werden, werden durch das Umschalten der nachfolgenden Multiplexer 19—23 mit dem Takt $T_G$, entsprechend der durch die Gleichung (7) festgelegten Zuordnung, in den Akkumulatoren 24—28 aufaddiert. Nach Abarbeitung aller P Gruppen, d.h. nach einem Zeitabschnitt der Länge P·$T_G$, enthalten die Akkumulatoren 24—28 die Werte N * $T_k$ entsprechend Gleichung (7), die dann in die nachfolgenden Register 29—33 übernommen werden, d.h. die Taktfrequenz der Register beträgt P * $T_G$. Gleichzeitig mit der Übernahme der Ergebnisse in die Register werden die Akkumulatoren zurückgesetzt, so daß der Nächste Vektor $\vec{A}$ verarbeitet werden kann.

Verwendung findet diese Schaltungsanordnung z.B. bei der Durchführung einer diskreten Korrelation entsprechend Gleichung (1) oder einer diskreten Faltung. Als diskreter zyklischer Korrelator kann die Schaltungsanordnung beispielsweise angewendet werden bei der Impulserkennung bei Codemultiplex-Übertragung, zur Zeitverzögerungsmessung in der Radartechnik, als Matched-Filter, zur m-Transformation bei der Bildverarbeitung, bei der Kryptographie, zur Fehlerkorrektur oder zur Synchronisierung bei der digitalen Datenübertragung.

Mit mehreren entsprechend den Figuren 1 oder 7 parallel nebeneinander geschalteten Schaltungsanordnungen sind mehrere Vektoren bzw. Matrizen gleichzeitig in einen Spektralbereich transformierbar.

Als Bausteine für den digitalen Korrelator bieten sich folgende Schaltungen an: Für die Bezugszeichennummer 1 können ein oder mehrere D-Flip-Flop, die als integrierte Schaltkreise '74 existent sind, verwendet werden (siehe dazu Texas Instruments "The TTL Data Book"). Für die Bezugszeichnummern 5, 6 und 7 können ein oder mehrere Full-Adder '83 verwendet werden, für die Bezugszeichnummern 8, 9 und 10 werden entsprechend die Leiterbahnen miteinander verknüpft bzw. verdrahtet. Für die Bezugszeichennummer 11 können ein oder mehrere Full-Adder '83 oder '283, für die Bezugszeichnummern 12—16 ebenso ein oder mehrere Full-Adder '83 oder '283, für die Bezugszeichnummer 17 ein oder mehrere seriell in / parallel out integrierte Schaltkreise '95 oder '164, für die Bezugszeichennummer 24—28 ein oder mehrere D-Flip-Flop und Full-Adder '74 und '83, für die Bezugszeichennummer 29—33 ein oder mehrere D-Flip-Flop '74 und für die Bezugszeichnummern 19—23 jeweils ein oder mehrere Multiplexer '53 verwendet sein. Das "'" entspricht dabei TTL-Schaltungen der Familien 74, 74LS, 74ALS, 74S usw. z.B. entspricht der Baustein '00 den integrierten Schaltkreisen 7400, 74LS00, 74AS00 oder 74S00.

**Patentansprüche**

1. Schaltungsanordnung zur parallelen Transformation eines Vektors $\vec{\hat{A}}$ der Länge N bestehend aus den Elementen {$_0$, . . . , $a_i$ . . . $a_{N-1}$} mit Hilfe einer quadratischen Matrix $\underline{B}^2$, dadurch gekennzeichnet, daß

die Matrix $\underline{B}^2$ derart aufgebaut ist, daß die Zeilen der Matrix $\underline{B}^2$ einen Vektor $\vec{B}$ der Länge N bestehend aus den Elementen $\{b_0, \ldots, b_i, \ldots, b_{N-1}\}$ enthalten, der zeilenweise zyklischlinks verschoben ist, daß der Vektor $\vec{A}$ in P Teilvektoren aufgeteilt ist, die jeweils aus R aufeinanderfolgenden Elementen des Vektors $\vec{A}$ bestehen und die von $0$ bis $P-1$ durchnummeriert sind, wobei der letzte Teilvektor mit Nullen aufgefüllt wird, wenn die Länge N des Vektors $\vec{A}$ kein ganzzahliges Vielfaches der Teilvektorlänge R beträgt, daß jeder Teilvektor jeweils einer Additionsschaltung $U_n$ zugeführt wird, die $2^R$ Ausgangssignale $u_{n,j}$ mit $j = 0, \ldots, 2^R-1$ liefert, die nach der mathematischen Beziehung

$$u_{n,j} = \sum_{m=0}^{R-1} a_{n*R+m} * x_{j,m}$$

berechnet werden, wobei das Symbol $*$ eine Multiplikation bedeutet und n die Nummer eines Teilvektors mit $n = 0, \ldots, P-1$, $a_{n*R+m}$ Elemente des n-ten Teilvektors und $x_{j,m}$ die m-te Stelle der binären Darstellung der Zahl j darstellt, daß die Ausgangssignale $u_{n,j}$ jeder Additionsschaltung $U_n$ jeweils einer Verknüpfungs-schaltung $V_n$ zugeführt werden, die N Ausgangssignale $d_{n,k}$ mit $k = 0, \ldots, N-1$ liefert, die nach der mathematischen Beziehung

$$d_{n,k} = u_{n,j(K)}$$

mit

$$j(K) = \sum_{m=o}^{R-1} 2^m * b_{(K+m)} \ modulo \ N$$

ermittelt werden, wobei $b_{(K+m) \ modulo \ N}$ Elemente des Vektors B darstellt, daß die Ausgangssignal $d_{n,k}$ aller Verknüpfungsschaltung $V_n$ einem Rechenwerk RW1 zugeführt werden, das nach der mathematischen Beziehung

$$N * T_K = \sum_{n=o}^{P-1} d_{n,(K+n*R)} \ modulo \ N$$

aufgebaut ist, wobei $N * T_K$ ein Ausgangssignal des Rechenwerkes RW1 und K die Nummer eines Ausgangssignales darstellt und daß die N Ausgangssignale $N * T_K$ des Rechenwerkes RW1, die mit dem Faktor N multiplizierten Werte der Transformierten T sind.

2. Schaltungsanordnung zur seriellen Transformation eines Vektors $\vec{A}$ der Länge N bestehend aus den Elementen $\{a_0, \ldots, a_i, \ldots, a_{N-1}\}$ mit Hilfe einer quadratischen Matrix $\underline{B}^2$, dadurch gekennzeichnet, daß die Matrix $\underline{B}^2$ derart aufgebaut ist, daß die Zeillen der Matrix $\underline{B}^2$ einen Vektor $\vec{B}$ der Länge N bestehend aus den Elementen $\{b_0, \ldots, b_i, \ldots, b_{N-1}\}$ enthalten, der zeilenweise zyklisch verschoben ist, daß der Vektor $\vec{A}$ in P Teilvektoren aufgeteilt ist, die jeweils aus R aufeinanderfolgenden Elementen des Vektors $\vec{A}$ bestehen und die von $0$ bis $P-1$ durchnummeriert sind, wobei der letzte Teilvektor mit Nullen aufgefüllt wird, wenn die Länge N des Vektors $\vec{A}$ kein ganzzahliges Vielfaches der Teilvektorlänge R beträgt, daß die Teilvektoren einer Additionsschaltung U, die analog einer im Anspruch 1 definierten Additionsschaltung $U_n$ arbeitet, nacheinander im Zeitintervall $T_G$ zugeführt werden, daß die Ausgangssignale $U_{n,j}$ der Additionsschaltung V einer Verknüpfungsschaltung V, die analog einer im Anspruch 1 definierten Verknüpfungs-schaltung $V_n$ arbeitet, zugeführt werden und daß die Ausgangssignale $d_{n,K}$ der Verknüpfungsschaltung V einem Rechenwerk RW2 zugeführt werden, das nach Abarbeitung aller P Teilvektoren, d.h. nach einem Zeitintervall der Länge $P * T_G$, als Ausgangssignale die mit dem Faktor N multiplizierten Werte $N * T_K$, der Transformierten $\vec{T}$ liefert, und daß in dem Rechenwerk RW2 Berechnung der Ausgangssignalle $N * T_K$ die teilweise zeitlich nacheinander auftretenden Ausgangssignale $d_{n,K}$ entsprechend der mathmatischen Beziehung

$$N * T_K = \sum_{n=o}^{P-1} d_{n,(K+n*R)} \ modulo \ N$$

verknüpft werden, wobei das Symbol * eine Multiplikation bedeutet.

3. Schaltungsanordnung nach Anspruch 2, dadurch gekennzeichnet, daß das Rechenwerk RW2 aus N Akkumulatoren, die mit einer Taktfrequenz von $1 / T_G$ betrieben werden, aufgebaut ist, denen jeweils über Multiplexer, die mit dem Zeittakt $T_G$ umgeschaltet werden, die zur Berechnung eines Ausgangssignale $N * T_k$ benötigten Werte $d_{n,k}$ zugeführt werden und denen jeweils ein Register nachgeschaltet ist, das mit einer Taktfrequenz von $P * T_G$ betrieben wird und so die jeweils nach einem Zeitabstand $P * T_G$ in den Akkumulatoren stehenden Ergebnisse übernimmt und auf die Ausgänge des Rechenwerkes RW2 gibt.

**Revendications**

1. Circuit pour la transformation parallèle d'un vecteur $\vec{A}$ de longueur N, composé des élémentes {$a_0$, . . . . , $a_i$ . . . . , $a_{N-1}$}, à l'aide d'une matrice carrée $\underline{B}^2$, caractérisé en ce que la structure de la matrice $\underline{B}^2$ est telle que les lignes de la matrice $\underline{B}^2$ contiennent un vecteur $\vec{B}$ de longueur N, composé des élémentes {$b_0$, . . . . , $b_i$ . . . . , $b_{N-1}$} qui est décalé cycliquement vers la gauche, ligne par ligne, en ce que le vecteur $\vec{A}$ est divisé en P vecteurs partiels, composés chacun de R éléments successifs du vecteur $\vec{A}$, numérotés de $0$ à P—1, le dernier vecteur étant rempli par des zéros si la longueur N du vecteur $\vec{A}$ n'est pas un multiple entier de la longueur des vecteurs partiels R, en ce que chacun des vecteurs partiels est envoyé un circuit additionneur $U_n$ fournissant $2^R$ signaux de sortie $u_{n,j}$ avec $j = 0, \ldots, 2^R-1$, calculés d'après la relation mathématique

$$u_{n,j} = \sum_{m=0}^{R-1} a_{n*R+m} * x_{j,m}$$

le symbole * signifiant une multiplication et n représentant le numéro d'un vecteur partiel avec $n = 0, \ldots$, P—1, $a_{n*R+m}$ éléments du n-ième vecteur partiel et $x_{j,m}$ la m-ième position de la représentation binaire du nombre j, en ce que les signaux de sortie $u_{n,j}$ de chaque circuit additionneur $U_n$ sont envoyés à un circuit combinatoire $V_n$ fournissant N signaux de sortie $d_{n,k}$ avec $k = 0, \ldots, N-1$, déterminés d'après la relation mathématique

$$d_{n,k} = u_{n,j(K)}$$

mit

$$j(K) = \sum_{m=o}^{R-1} 2^m * b_{(K+m) \ modulo \ N}$$

$b_{(K+m) \ modulo \ N}$ représentant des élément du vecteur $\vec{B}$, en ce que les signaux de sortie $d_{n,k}$ de tous les circuits combinatoirs $V_n$ sont envoyés à un organe de calcul RW1, conçu conformément à la relation mathématique

$$N * T_K = \sum_{n=o}^{P-1} d_{n, (K+n*R) \ modulo \ N}$$

$N * T_K$ représentant un signal de sortie de l'organe de calcul RW1 et K le numéro d'un signal de sortie, et en ce que les N signaux de sortie $N * T_K$ de l'organe de calcul RW1 sont les valeurs de la transformée T, multipliées par le facteur N.

2. Circuit pour la transformation série d'un vecteur $\vec{A}$ de longueur N, composé des éléments {$a_0$, . . . . , $a_i$ . . . . , $a_{N-1}$}, à l'aide d'une matrice carrée $\underline{B}^2$, caractérisé en ce que la structure de la matrice $\underline{B}^2$ est telle que les lignes de la matrice $\underline{B}^2$ contiennent un vecteur $\vec{B}$ de longueur N, composé des éléments {$b_0$, . . . . , $b_i$ . . . . , $b_{N-1}$} qui est cycliquement décalé ligne par ligne, en ce que le vecteur $\vec{A}$ est divisé en P vecteurs partiels, composés chacun de R éléments successifs du vecteur $\vec{A}$, numérotés de 0 à P—1, le dernier vecteur partiel étant rempli par des zéros si la longueur N du vecteur $\vec{A}$ n'est pas un multiple entier de la longueur des vecteurs partiels R, en ce que les vecteurs partiels sont envoyés successivement, dans l'intervalle $T_G$ à un circuit additionneur U qui fonctionne de façon analogue à un circuit additionneur $U_n$ tel que défini dans la revendication 1, en ce que les signaux de sortie $u_{n,j}$ du circuit additionneur U sont envoyés à un circuit combinatoire V fonctionnant de façon analogue à un circuit combinatoire $V_n$ défini

**EP 0 239 599 B1**

dans la revendication 1, et en ce que les signaux de sortie $d_{n,K}$ du circuit combinatoire V sont envoyés à un organe de calcul RW2 qui, après traitement de tous les P vecteurs partiels, c'est-à-dire après un intervalle de durée P * $T_G$, délivre en tant que signaux de sortie les valeurs N * $T_K$ de la transformée $\vec{T}$, multipliées par le facteur N, et en ce que, pour le calcul des signaux de sortie N * $T_K$, les signaux de sortie $d_{n,K}$ se produisant de partie successivement sont combinés dans l'organe de calcul RW2 selon la relation mathématique

$$N * T_K = \sum_{n=o}^{P-1} d_{n,(K+n*R)} \ modulo \ N$$

dans laquelle le symbole * signifie une multiplication.

3. Circuit selon la revendication 2, caractérisé en ce que l'organe de calcul RW2 est composé de N accumulateurs fonctionnant à une fréquence d'horloge de $1/T_G$, auxquels envoyés, par l'intermédiaire de multiplexeurs commutés à la période d'horloge $T_G$, les valeurs $d_{n,k}$, nécessaires pour le calcul d'un signal de sortie N * $T_k$ et qui sont suivis chacun d'un registre, fonctionnant à une fréquence d'horloge de P * $T_G$, qui prend ainsi en charge les résultats délivrés par les accumulateurs après un intervalle P * $T_G$ et les applique aux sorties de l'organe de calcul RW2.

**Claims**

1. A circuit arrangement for parallel transformation of a vector $\vec{A}$ of the length N comprising the elements $\{a_0, \ldots, a_i \ldots, a_{N-1}\}$ with the aid of a quadratic matrix $\underline{B}^2$, characterised in that the matrix $\underline{B}^2$ is constructed such that the lines of the matrix $\underline{B}^2$ include a vector $\vec{B}$ of the length N comprising the elements $\{b_0, \ldots, b_i \ldots, b_{N-1}\}$, which vector is shifted cyclically to the left in lines, that the vector $\vec{A}$ is subdivided into P vector parts, which each comprise R successive elements of the vector $\vec{A}$ and which are numbered through from 0 to P—1, in which the last vector part is filled up with zeroes, if the length N of the vector $\vec{A}$ is not a whole numbered multiple of the vector part length R, that each vector part is supplied in each case to an addition circuit $U_n$, which delivers $2^R$ output signals $u_{n,j}$ with $j = 0, \ldots, 2^R-1$, which are calculated according to the mathematical relationship:

$$u_{n,j} = \sum_{m=0}^{R-1} a_{n*R+m} * x_{j,m}$$

in which the symbol * signifies a multiplication and n represents the number of a vector part with n = 0, …, P—1, $a_{n*R+m}$ elements of the nth vector part and $x_{j,m}$ represents the mth digit of the binary representation of the number j, that the output signals $u_{n,j}$ of each addition circuit $U_n$ are supplied in each case to a linking circuit $V_n$, which delivers N output signals $d_{n,k}$ with k = 0, …, N—1, which are ascertained according to the mathematical relationship:

$$d_{n,k} = u_{n,j(K)}$$

mit

$$j(K) = \sum_{m=o}^{R-1} 2^m * b_{(K+m)} \ modulo \ N$$

in which $b_{(K+m) \ modulo \ N}$ represents elements of the vector B, that the output signals $d_{n,k}$ of all the linking circuits $V_n$ are supplied to an arithmetic unit RW1, which is constructed according to the mathematical relationship:

$$N * T_K = \sum_{n=o}^{P-1} d_{n,(K+n*R)} \ modulo \ N$$

7

in which N * $T_K$ represents an output signal of the arithmetic unit RW1 and K is the number of an output signal and that the N output signals N * $T_K$ of the arithmetic unit RW1 are the values of the transforms T multiplied by the factor N.

2. A circuit arrangement for serial transformation of a vector $\vec{A}$ of the length N comprising the elements $\{a_0, \ldots, a_i \ldots, a_{N-1}\}$ with the aid of a quadratic matrix $\underline{B^2}$, characterised in that the matrix $\underline{B^2}$ is constructed such that the lines of the matrix $\underline{B^2}$ include a vector $\vec{B}$ of the length N comprising the elements $\{b_0, \ldots, b_i \ldots, b_{N-1}\}$, which is shifted cyclically in lines, that the vector $\vec{A}$ is subdivided into P vector parts, which comprise in each case R successive elements of the vector $\vec{A}$ and which are numbered through from 0 to P—1, in which the last vector part is filled up with zeroes, if the length N of the vector $\vec{A}$ is not a whole numbered multiple of the vector part length R, that the vector parts of an addition circuit U, which operates like an addition circuit $U_n$ as defined in Claim 1, are supplied in succession in the time interval $T_G$, that the output signals $U_{n,j}$ of the addition circuit U are supplied to a linking circuit V which operates like a linking circuit $V_n$ as defined in claim 1, and that the output signals $d_{n,k}$ of the linking circuit V are supplied to an arithmetic unit RW2, which, after working through all of the P vector parts, i.e. after a time interval of the length P * $T_G$, delivers as output signals the values N * $T_K$ of the transforms T multiplied by the factor N, and that in the arithmetic unit RW2 for calculating the output signals N * $T_K$ the partly succeeding output signals $d_{n,K}$ over time are linked according to the mathematical relationship:

$$N * T_K = \sum_{n=0}^{P-1} d_{n,(K+n*R)} \text{ modulo } N$$

in which the symbol * signifies a multiplication.

3. A circuit arrangement according to claim 2, characterised in that the arithmetic unit RW2 is constructed from N accumulators, which are operated at a clock frequency of 1 / $T_G$, to which accumulators the values $d_{n,k}$ which are required to calculate an output signal N * $T_k$ are supplied in each case via multiplexers switched by the timing pulse $T_G$ and after which in each case a register is connected, which is operated at a clock frequency of P * $T_G$ and thus receives the results in the accumulators after a time spacing P * $T_G$ in each case and passes them to the outputs of the arithmetic unit RW2.

Fig.1

Fig.2

Fig.3

$$\underline{B}^2 = \begin{bmatrix} 0 & 1 & 1 & 0 & 1 \\ 1 & 1 & 0 & 1 & 0 \\ 1 & 0 & 1 & 0 & 1 \\ 0 & 1 & 0 & 1 & 1 \\ 1 & 0 & 1 & 1 & 0 \end{bmatrix}$$

Fig.4

| K | 0 | 1 | 2 | | N−1 |
|---|---|---|---|---|---|
| $2^0$ | $b_0$ | $b_1$ | $b_2$ .... | | $b_{N-1}$ |
| $2^1$ | $b_1$ | $b_2$ | $b_3$ .... | | $b_0$ |
| $2^m$ | | | | | |
| $2^{R-1}$ | $b_{R-1}$ | $b_R$ | $b_{R+1}$ .... | | $b_{R-2}$ |
| $j(k)$ | $j(0)$ | $j(1)$ | . . . . . . . | | $j(N-1)$ |

a)

| k | 0 | 1 | 2 | 3 | 4 |
|---|---|---|---|---|---|
| | 0 | 1 | 1 | 0 | 1 |
| | 1 | 1 | 0 | 1 | 0 |
| | 1 | 0 | 1 | 0 | 1 |
| $j(k)$ | 6 | 3 | 5 | 2 | 5 |

b)

Fig.5

$u_{n,0}$    $d_{n,0}$
$u_{n,1}$    $d_{n,1}$
$u_{n,2}$    $d_{n,2}$
$u_{n,3}$    $d_{n,3}$
$u_{n,4}$    $d_{n,l}$
$u_{n,5}$
$u_{n,6}$
$u_{n,7}$

$V_n$

Fig. 6

3

Fig. 7

EP 0 239 599 B1